# DEMANDE DE BREVET EUROPEEN

(11) **EP 1 174 480 A1**
(43) Date de publication de la demande: **23.01.2002**
(21) Numéro de dépôt: 00115399.8
(22) Date de dépôt: 17.07.2000
(51) Int. Cl.: C09J 161/06, C09J 161/22, C08K 5/06

(54) **Colle aminoplaste ou phénoplaste à résistance mécanique améliorée**

(71) Demandeur: LAMBIOTTE & CIE S.A., B-1180 Bruxelles (BE)
(72) Inventeur: Pizzi, Antonio, (Enstib), 88051 Epinal Cedex 9 (FR); Lambiotte, Georges, 1180 Bruxelles (BE)
(74) Mandataire: Micheli & Cie

(57) **Abrégé**

La présente invention concerne une colle aminoplaste ou phénoplaste à résistance mécanique améliorée, qui contient un acétal d'alcool en C1 à C6, ainsi qu'une méthode pour augmenter la résistance mécanique d'une colle aminoplaste ou phénoplaste, selon laquelle on ajoute à la composition de colle un acétal d'alcool en C1 à C6.

## Description

La présente invention concerne une colle aminoplaste ou phénoplaste améliorée, ainsi qu'une méthode pour augmenter la résistance mécanique d'une colle aminoplaste ou phénoplaste.

Les colles de type aminoplaste ou phénoplaste sont bien connues et utilisées dans de nombreux domaines, par exemple dans la fabrication de panneaux de particules de bois, de contreplaqués, etc. En pratique, on sait que l'un des problèmes posés par l'utilisation de telles colles est constitué par les émissions de formaldéhyde qui peuvent se produire tant lors des processus de fabrication que pendant le vieillissement des produits fabriqués, ce qui a d'ailleurs amené de nombreux gouvernements à édicter des limites quant à la teneur en formol de telles colles.

Par contre, la diminution du rapport molaire du formol conduit à une diminution de la résistance mécanique des colles et des produits obtenus par l'utilisation de celles-ci. Ce problème a partiellement été résolu par l'introduction de mélamine pour augmenter la résistance mécanique, toutefois de manière non complètement satisfaisante, et conduisant en outre à augmenter le coût des colles et des produits obtenus avec celles-ci.

Le but de cette invention consiste par conséquent à fournir une colle aminoplaste ou phénoplaste qui présente une résistance mécanique améliorée, ceci indépendamment de la teneur en mélamine de celle-ci.

Or, les présents inventeurs ont mis en évidence le fait que, et ceci de manière inattendue, l'adjonction d'un acétal permettait d'augmenter la résistance mécanique de telles colles aminoplastes ou phénoplastes.

Ainsi, le premier objet de la présente invention visant à atteindre le but précité, consiste en une colle aminoplaste ou phénoplaste à résistance mécanique améliorée qui contient un acétal d'alcool en C1 à C6.

Un second objet de cette invention consiste en une méthode pour augmenter la résistance mécanique d'une colle aminoplaste ou phénoplaste, qui est caractérisée en ce qu'on ajoute à la composition de colle un acétal d'alcool en C1 à C6.

De préférence, les acétals ajoutés dans les colles selon la présente invention sont le méthylal (diméthoxyméthane) et l'éthylal (diéthoxyéthane).

En ce qui concerne le pourcentage d'acétal dans les colles, celui-ci est généralement compris entre 3 et 30 %, de préférence de 10 à 20 %.

Plus particulièrement, les compositions de colles auxquelles s'appliquent de préférence la présente invention sont les colles aminoplastes à base d'un mélange urée-formol avec un rapport molaire de 1/1,5, et celles à base d'un mélange mélamine-urée-formol ayant un rapport molaire produits azotés-formol de 1/1,2 à 1/1,5, ainsi que les colles phénoplastes à base d'un mélange phénol-formol ayant un rapport molaire de 1/1,7.

La présente invention sera maintenant décrite à titre illustratif et non limitatif en référence aux deux exemples qui suivent et qui sont essentiellement destinés à démontrer l'augmentation de la résistance mécanique des colles aminoplastes et phénoplastes selon l'invention.

### Exemple 1: Analyse thermo-mécanique (TMA)

(a) Préparation des mélanges collants:
Pour les colles urée-formol (UF) et mélamine-urée-formol (MUF), on ajoute à 100 parties en poids de colle, dont le contenu solide est de 60%, 1,8, 6 et 12 parties en poids de méthylal, respectivement d'éthylal (pour les mélanges à 3,10 et 20 % d'acétal) et 7,5 parties d'une solution à 20 % de durcisseur (chlorure ou sulfate d'ammonium)
Pour les colles phénol-formol (PF), on pratique de la même manière, sauf qu'il n'y a pas d'addition de durcisseur.

(b) Mode opératoire:
Le principe de cette méthode repose sur un système de modélisation du pressage de panneaux obtenu par l'assemblage de deux plaquettes au moyen de la colle à analyser, la qualité de l'assemblage obtenue étant directement liée à celle du mélange collant utilisée.
Plus particulièrement, 30 mg de mélange collant sont déposés entre deux plaquettes de hêtre, et l'assemblage ainsi obtenu est disposé sur un support, de telle sorte que ledit assemblage soit supporté par ses deux extrémités, et le tout est placé dans un four.
Le four est soumis à un programme d'augmentation en température de 25 à 250 °C, à raison de 10°C/min., ce qui conduit à un durcissement de la colle entre les deux plaquettes, et à la formation d'une seule plaquette de bois massif. Pendant la montée en température, une force est appliquée verticalement (F= 30 g) au milieu de la plaquette, cette force induisant une flexion (f) qui permet de déterminer le module d'élasticité.
Cette flexion (f) diminue en fonction de la température, démontrant une augmentation de la résistance mécanique.
L'appareil utilisé dans cette expérimentation était un analyseur thermomécanique "METTLER TMA 40", relié à un processeur et à un ordinateur permettant d'enregistrer les thermogrammes et de traiter les données obtenues.
Plus particulièrement, et pour chaque échantillon testé, on a mesuré la déflexion (f en µm) en fonction de la température, et on a calculé le module d'élasticité (E en Mpa) selon l'équation : E = [1/(f-3,2)]. 47386.

(c) Résultats :
- Sur le tableau I ci-après sont réunis les résultats obtenus pour des colles aminoplastes (de types UF et MUF).

**Tableau I**

| Adjuvant | Module d'élasticité maximal (moyenne corrigée) des mélanges collants (Mpa) | | |
|---|---|---|---|
| | Colle UF 1/1.5 | Colle MUF 1/1.2 | Colle MUF 1/1.5 |
| Témoin | 1543 | 2210 | 2867 |
| Methylal | | | |
| 3% | 2444 | 2523 | 3026 |
| 10% | 2460 | 3816 | 4418 |
| 20% | 1889 | 3933 | 5597 |
| Ethylal | | | |
| 3% | 2172 | 2553 | 3398 |
| 10% | 2238 | 4459 | 3506 |
| 20% | 2390 | 3164 | 4773 |

- Sur le tableau II ci-après sont mentionnés les résultats obtenus pour une colle phénoplaste (de type PF).

**Tableau II**

| Adjuvant | Module d'élasticité maximale (moyenne corrigée) des mélange collants (Mpa) |
|---|---|
| | Colle PF 1/1.7 |
| Témoin | 2126 |
| Methylal | |
| 3% | 2156 |
| 10% | 2432 |
| 20% | 3250 |

Les résultats figurant sur les tableaux I et II démontrent clairement l'effet de l'acétal sur le module d'élasticité mesuré, et par conséquent sur l'augmentation de la résistance mécanique obtenue avec des colles aminoplastes et phénoplastes.

### Exemple 2: Mesure de résistance à la traction sur panneaux de particules

(a) Préparation des panneaux :
A 1000 g de particules de bois sec ont été additionnées les quantités indiquées en g sur le Tableau III ci-après des divers constituants.

**Tableau III**

| | No d'échantillon | | | |
|---|---|---|---|---|
| | 1 | 2 | 3 | 4 |
| Bois sec | 1000 | 1000 | 1000 | 1000 |
| Colle MUF 1/1,1 en solution à 60% (en équivalant solide) | 167 (100) | 167 (100) | 133 (80) | 100 (60) |
| Solution à 20% de chlorure d'ammonium | 7,5 | 7,5 | 6,0 | 4,5 |
| Methylal | - | 10 | 8 | 6 |

Les panneaux ont été pressés à une température de surface de 190°C, à une pression maximale de 28 kg/cm², avec un cycle de pressage de 3 min. pour une épaisseur finale de panneau de 14 mm (temps de pressage: 12,8 sec/mm).
(b) Résultats :
Sur les panneaux ainsi obtenus, des mesures de résistance à la traction ont été effectuées, en utilisant une méthode usuelle (telle que décrite par exemple dans les normes européennes EN 300, 313 et 319).
Les résultats obtenus sont mentionnés sur le tableau IV ci-après:

**Tableau IV**

| | Résistance à la traction | Diminution de la quantité de colle |
|---|---|---|
| Echantillon 1 (témoin) | 1,011 | - |
| Echantillon 2 | 1,335 | - |
| Echantillon 3 | 1,026 | 20% |
| Echantillon 4 | 0,826 | 40% |

Il ressort tout d'abord de ces résultats que, tous les autres paramètres étant identiques, la résistance à la traction obtenue est nettement améliorée pour l'échantillon No 2 par rapport au témoin (échantillon No 1).

De plus, la présence de méthylal permet de diminuer la quantité de colle, tout en conservant une résistance à la traction comparable (échantillons No 3 et 4 par rapport au témoin).

Compte tenu de ce qui précède, et grâce à la présente invention, il est possible d'obtenir une diminution des coûts des panneaux fabriqués, et surtout une diminution des émissions de formaldéhyde, tant durant la production que durant le vieillissement des panneaux.

En outre, la mélamine étant introduite dans les colles UF pour augmenter leur résistance mécanique, la présence d'un acétal permet donc de diminuer la quantité de mélamine nécessaire pour une résistance mécanique équivalente, ce qui contribue également à la diminution du prix des colles et des panneaux fabriqués avec celles-ci.

Enfin, il convient encore de relever que la présence d'acétal dans une colle aminoplaste ou phénoplaste augmente la compatibilité à l'eau de celle-ci.

Une colle augmente, après préparation, son degré de polymérisation avec le temps ; la colle est alors dite plus "avancée", ce qui a pour conséquence d'augmenter la vitesse de réaction de ladite colle lors de son utilisation. Cependant, une colle plus polymérisée diminue sa compatibilité à l'eau et donc son aptitude à être diluée.

Le fait que la présence d'acétal dans une colle augmente sa compatibilité à l'eau a donc une double conséquence, à savoir d'une part pour un même degré de polymérisation, la compatibilité à l'eau est accrue, et d'autre part pour une même compatibilité à l'eau, le degré de polymérisation, donc la vitesse de réaction lors de l'utilisation, peut-être également augmenté.

## Revendications

1. Colle aminoplaste ou phénoplaste à résistance mécanique améliorée, **caractérisée par le fait qu'**elle contient un acétal d'alcool en C1 à C6.

2. Colle selon la revendication 1, **caractérisée par le fait que** l'acétal est le méthylal ou l'éthylal.

3. Colle selon la revendication 1 ou la revendication 2, **caractérisée par le fait qu'**elle contient de 3 à 30 % d'acétal, de préférence de 10 à 20 %.

4. Colle aminoplaste selon l'une des revendications 1 à 3 à base d'un mélange urée-formol avec un rapport molaire de 1/1,5.

5. Colle aminoplaste selon l'une des revendications 1 à 3 à base d'un mélange mélamine-urée-formol avec un rapport molaire produits azotés-formol de 1/1,2 à 1/1,5.

6. Colle phénoplaste selon l'une des revendications 1 à 3 à base d'un mélange phénol-formol avec un rapport molaire de 1/1,7.

7. Méthode pour augmenter la résistance mécanique d'une colle aminoplaste ou phénoplaste, **caractérisée par le fait qu'**on ajoute à la composition de colle un acétal d'alcool en C1 à C6.

8. Méthode selon la revendication 7, **caractérisée par le fait qu'**on ajoute à la composition de colle de 3 à 30 % de préférence de 10 à 20 % de méthylal ou déthylal.
